# EUROPÄISCHE PATENTSCHRIFT

(11) **EP 4 161 765 B1**
(45) Veröffentlichungstag und Bekanntmachung des Hinweises auf die Patenterteilung: **10.04.2024**
(21) Anmeldenummer: 21724229.6
(22) Anmeldetag: 03.05.2021
(51) Int. Cl.: B29C 73/10

(54) **REPARATURPFLASTER FÜR EIN ELASTOMERES BAUTEIL MIT VERBESSERTER VERBINDUNGSSCHICHT**
REPAIR PATCH FOR AN ELASTOMER COMPONENT WITH AN IMPROVED CONNECTION LAYER
EMPLÂTRE DE RÉPARATION POUR UN ÉLÉMENT ÉLASTOMÈRE DOTÉ D'UNE COUCHE DE LIAISON AMÉLIORÉE

(30) Priorität: 09.06.2020 DE 102020207204
(43) Veröffentlichungstag der Anmeldung: 12.04.2023
(73) Patentinhaber: Rema Tip Top AG, 85586 Poing (DE)
(72) Erfinder: CASPER, Christian, 85229 Markt Indersdorf (DE); KINZL, Florian, 85652 Pliening (DE); MÜCKE, Sylvia, 85457 Wörth (DE)
(74) Vertreter: MERH-IP Matias Erny Reichl Hoffmann Patentanwälte PartG mbB
(86) Internationale Anmeldenummer: PCT/EP2021/061586
(87) Internationale Veröffentlichungsnummer: WO 2021/249697

(56) Entgegenhaltungen:
- DE-A1- 19 836 149
- DE-A1-102009 050 899

## Beschreibung

### TECHNISCHES FELD

Die Erfindung betrifft ein Reparaturpflaster für ein elastomeres Bauteil, insbesondere für einen Fahrzeugreifen, die Verwendung des Reparaturpflasters zur Reparatur eines beschädigten Fahrzeugreifens, und ein Verfahren zum Verbinden des Reparaturpflasters mit einem elastomeren Bauteil. Das Reparaturpflaster umfasst insbesondere eine Verbindungsschicht, welche vor der Vulkanisation eine Mischung aus einer ersten und einer zweiten Naturkautschukkomponente enthält, wobei die Mischung eine bimodale Molekulargewichtsverteilung aufweist.

### TECHNISCHER HINTERGRUND

Im Allgemeinen wird die Reparatur eines beschädigten Fahrzeugreifens bei kleineren Stichverletzungen auf dem Flächenbereich mittels eines sogenannten Kombireparaturkörpers durchgeführt. Bei größeren Schäden im Laufflächen- oder Seitenwandbereich hingegen wird die Schadensstelle ausgearbeitet und der dabei entstehende sogenannte Trichter mit Rohgummi gefüllt. Die im Schadensbereich unterbrochenen Festigkeitsträger werden dann mittels eines Reparaturpflasters, welches seinerseits entsprechende Festigkeitsträger enthält, überbrückt. Da der Kraftfluss in den Festigkeitsträgern von Fahrzeugreifen und Reparaturpflastern über die dazwischen liegenden Gummischichten übertragen werden muss, werden insbesondere an die Verbindungsschicht zwischen Fahrzeugreifen und Reparaturpflaster hohe Anforderungen im Hinblick auf eine sichere und dauerhafte Bindung an den Fahrzeugreifen gestellt.

Bei den zum Einbau eines Reparaturpflasters in einen Fahrzeugreifen bekannten Verfahren sind zwei Elemente erforderlich, um eine dauerhafte Verbindung von Reparaturpflaster und Fahrzeugreifen zu schaffen, ein Klebstoff und die oben genannte Verbindungsschicht des Reparaturpflasters.

Der Klebstoff besteht in der Regel aus in Lösungsmittel gelöstem Naturkautschuk, Harzen und Beschleuniger, der für die Reaktion, insbesondere für die Vulkanisation, benötigt wird.

Bei den bekannten Reparaturverfahren von Fahrzeugreifen wird die Reparaturstelle gewöhnlich vor dem Aufbringen des Reparaturpflasters gereinigt und aufgeraut um eine aktive Oberfläche mit hoher Struktur zu erzeugen. Im nächsten Schritt wird der Klebstoff auf die Reparaturstelle aufgebracht. Anschließend muss das Lösungsmittel des Klebstoffes ablüften. Danach wird das Reparaturpflaster auf die Reparaturstelle aufgelegt und angepresst. Je nach gewähltem Verfahren erfolgt die Vulkanisation dann drucklos bei Raumtemperatur oder durch Einwirkung von Druck und Temperatur mittels geeigneter Vorrichtungen (z.B. im Autoklav oder in einer Heizpresse). Nachteilig bei diesem Verfahren ist vor allem die erforderliche Zeit zum Ablüften des Lösungsmittels.

Im Allgemeinen basieren die bekannten Klebstoffe auf organischen Lösungsmitteln, wodurch sie eine Gefahr für die Umwelt und die Gesundheit des Anwenders darstellen können. In verschiedenen Ländern dürfen daher schon einige dieser Lösungsmittel zur Reparatur von Gegenständen aus Gummi nicht mehr verwendet werden.

Des Weiteren ist das Ablüften des Lösungsmittels anspruchsvoll, da die Haftung des Reparaturpflasters stark vom Ablüftgrad abhängig ist. Wenn der Klebstoff zu lange angetrocknet ist, wird keine ausreichende Haftung mehr erreicht (Übertrocknung). Ist dagegen die Antrocknungs- bzw. Ablüftzeit zu kurz bemessen worden, ist noch zu viel Lösungsmittel auf der Reparaturstelle vorhanden, so dass auch dann die Haftung des Reparaturpflasters nicht gewährleistet ist, da insbesondere bei einer Vulkanisation unter Temperatur das in der Reparaturstelle verbliebene Lösungsmittel zu Blasenbildung führt. Beim Einsatz entflammbarer Lösungsmittel sind zusätzlich entsprechende Maßnahmen zur Verhütung von Bränden, bspw. mittels Absaugung und Belüftung, notwendig.

Die Verbindungsschicht eines Reparaturpflasters besteht üblicherweise aus mastiziertem Naturkautschuk und Harzen und enthält keine Beschleuniger. Die Eigenschaften herkömmlicher Verbindungsschichten sind bei Standardanwendungen in der Regel ausreichend. Allerdings beeinflusst natürlich auch die Entwicklung im Bereich der elastomeren Bauteile, insbesondere im Fahrzeugreifensektor, die Anforderungen die an ein Reparaturpflaster zukünftig gestellt werden. So können sich beispielsweise die Reifenummantelung oder auch die aufgeraute Struktur der Schadensstelle während der Reparatur je nach Hersteller oder Anwendungsgebiet stark unterscheiden.

Aus der DE 10 2009 050899 A1 ist ein Reparaturpflaster für ein elastomeres Bauteil, insbesondere für einen Fahrzeugreifen, 2. gemäß dem Oberbegriff des Anspruchs 1 bekannt mit einer Deckschicht, einer Verbindungsschicht zur Auflage auf einer Wandung des elastomeren Bauteils, und zumindest einer zwischen der Verbindungsschicht und der Deckschicht angeordneten Zwischenschicht. Die Verbindungsschicht weist vor der Vulkanisation mit dem elastomeren Bauteil eine derartige Konfektionsklebrigkeit auf, dass eine Verbindung zwischen dem Reparaturpflaster und dem elastomeren Bauteil zumindest das Eigengewicht des Reparaturpflasters überträgt und die Verbindungsschicht nach der Vulkanisation mit dem elastomeren Bauteil einen Trennwert von mindestens 5 N/mm aufweist.

Aufgabe der Erfindung ist es daher, ein Reparaturpflaster und ein Verfahren zum Verbinden des Reparaturpflasters mit einem elastomeren Bauteil bereitzustellen, welche es ermöglichen, die Eigenschaften der Verbindungsschicht, insbesondere Haftfestigkeit und Belastungsstärke, in Abhängigkeit eines Anwendungsfalls variabel einstellen zu können.

### LÖSUNG DES PROBLEMS

Die Aufgabe wird mit den Merkmalen der unabhängigen Ansprüche 1 und 15 gelöst. Die abhängigen Ansprüche sind auf besondere Ausführungsformen der Erfindung gerichtet.

Erfindungsgemäß umfasst ein Reparaturpflaster für ein elastomeres Bauteil, insbesondere für einen Fahrzeugreifen, eine Deckschicht, eine Verbindungsschicht zur Auflage auf einer Wandung des elastomeren Bauteils, und mindestens eine zwischen der Verbindungsschicht und der Deckschicht angeordnete Zwischenschicht.

Die Verbindungsschicht enthält vor der Vulkanisation mit dem elastomeren Bauteil erfindungsgemäß eine erste und eine zweite Naturkautschukkomponente, wobei die erste Naturkautschukkomponente ein geringeres Molekulargewicht M_{W} aufweist als die zweite Naturkautschukkomponente, derart, dass eine Mischung der ersten und der zweiten Naturkautschukkomponente eine bimodale Molekulargewichtsverteilung aufweist. Auf diese Weise kann vorteilhaft über die erste Naturkautschukkomponente eine Haftfestigkeit der Verbindungsschicht und über die zweite Naturkautschukkomponente eine Belastungsstärke der Verbindungsschicht eingestellt werden.

Bimodal bedeutet hierin eine Verteilung, welche zwei Modi oder Maxima aufweist. Eine bimodale Verteilung kann sowohl symmetrisch als auch asymmetrisch sein. Erfindungsgemäß ergibt sich die bimodale Molekulargewichtsverteilung (Molmassenverteilung) aus der anteiligen Überlagerung der beiden, jeweils unimodalen (ein Modus, ein Maximum) Molekulargewichtsverteilungen der ersten und zweiten Naturkautschukkomponente. Dabei liegt das Maximum der unimodalen Molekulargewichtsverteilung der ersten Naturkautschukkomponente bei niedrigerem Molekulargewicht als das der zweiten Naturkautschukkomponente. Mit anderen Worten, erfindungsgemäß weist die erste Naturkautschukkomponente ein Maximum in der unimodalen Molekulargewichtsverteilung auf, welches bei niedrigerem Molekulargewicht liegt, als das der zweiten Naturkautschukkomponente.

Die hierin angegebenen Werte beziehen sich dabei auf das sogenannte Massenmittel M_{W.} Die bimodale Molekulargewichtsverteilung wird somit entsprechend durch die Verteilung eines Gewichtsanteils in Abhängigkeit des Molekulargewichts beschrieben.

Erfindungsgemäß werden Naturkautschuke in der Verbindungsschicht verwendet. Strukturell betrachtet ist Naturkautschuk ein cis-1,4-Polyisopren, welches durch Polymerisation von Isopren-Monomeren entsteht:

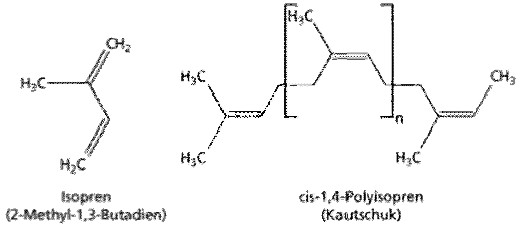

Naturkautschuke gehören zur Gruppe der sogenannten Elastomere. Elastomere sind weitmaschig verknüpfte Polymere, die gummielastisches Verhalten zeigen. Elastomere können direkt bei Polymerisation oder später durch Vulkanisation vernetzt werden.

In einer bevorzugten Ausführungsform kann die erste Naturkautschukkomponente ein Molekulargewicht von M_{w} = 1 × 10⁶ g/mol aufweisen. In einer überdies bevorzugten Ausführungsform kann die zweite Naturkautschukkomponente ein Molekulargewicht von M_{w} = 2 × 10⁶ g/mol aufweisen. Das Molekulargewicht kann in beiden Ausführungsformen durch Diffusion-Sedimentation und/oder Osmose bestimmt werden. Insbesondere können erfindungsgemäß handelsübliche Produkte mit entsprechenden Molekulargewichten eingesetzt werden. Beispielsweise kann als die erste Naturkautschukkomponente handelsüblicher Naturkautschuk mit konstant niedriger Viskosität verwendet werden, welcher im Allgemeinen durch Verschneiden von Kautschuksaft aus Bäumen zu Latizes, Fällen mit Säure zu Kautschukcrumbs und Pressen zu Ballen hergestellt wird. Als die zweite Naturkautschukkomponente kann beispielsweise Naturkautschuk mit konstant hoher Viskosität, etwa vom Typ RSS1 oder RSS3 verwendet werden.

Da Naturkautschuk als Naturprodukt unlösliche Gelanteile enthält, ist das Molekulargewicht von Naturkautschuk häufig schwer zu bestimmen. Alternativ oder zusätzlich kann daher die sogenannte Mooneyviskosität zur Charakterisierung herangezogen werden. Hierbei gilt, zwei Polymere des gleichen Typs deren Mooneyviskositäten deutlich unterschiedlich sind, sind auch im Molekulargewicht deutlich zu unterscheiden. In einer bevorzugten Ausführungsform kann daher eine Mooneyviskosität der ersten Naturkautschukkomponente und der zweiten Naturkautschukkomponente mindestens um einen Faktor 2 unterschiedlich sein. In einer besonders bevorzugten Ausführungsform kann die Mooneyviskosität ML=1+4/100°C der ersten Naturkautschukkomponente 35 - 40 MU betragen. In einer überdies bevorzugten Ausführungsform kann die Mooneyviskosität ML=1 +4/100°C der zweiten Naturkautschukkomponente 70-90 MU betragen. Die Mooneyviskosität kann dabei beispielsweise nach DIN 53523 bestimmt werden.

Erfindungsgemäß ist es nicht eingeschränkt, ob die erste und/oder die zweite Naturkautschukkomponente ein einzelner Naturkautschuk oder eine Mischung aus Naturkautschuken ist, deren Molekulargewicht M_{W}, jeweils im niedrigen bzw. hohen Bereich liegt. In einer bevorzugten Ausführungsform kann jedoch die erste Naturkautschukkomponente und/oder die zweite Naturkautschukkomponente aus einer Mischung aus Naturkautschuken bestehen. In einer weiteren bevorzugten Ausführungsform kann die erste Naturkautschukkomponente und/oder die zweite Naturkautschukkomponente aus einem einzelnen Naturkautschuk bestehen.

Erfindungsgemäß ist der Anteil der ersten und der zweiten Naturkautschukkomponente in der Mischung nicht eingeschränkt. In einer bevorzugten Ausführungsform kann ein Anteil der ersten Naturkautschukkomponente 25-50 Gew.-% bezogen auf die Gesamtmasse der ersten und der zweiten Naturkautschukkomponente betragen, und ein Anteil der zweiten Naturkautschukkomponente 50-75 Gew.-% bezogen auf die Gesamtmasse der ersten und der zweiten Naturkautschukkomponente betragen, besonders bevorzugt kann der Anteil der ersten Naturkautschukkomponente jedoch 35-45 Gew.% und der Anteil der zweiten Naturkautschukkomponente 55-65 Gew.% betragen, ganz besonders bevorzugt kann der Anteil der ersten Naturkautschukkomponente aber 44 Gew.% betragen und der Anteil der zweiten Naturkautschukkomponente 56 Gew.%. Auf diese Weise kann vorteilhaft bei verbesserter Belastungsstärke gleichzeitig eine gute Haftfestigkeit gewährleistet werden.

Des Weiteren kann die Verbindungsschicht in einer bevorzugten Ausführungsform zusätzlich ein Füllstoffsystem aus einer gefällten Kieselsäure 5-15%, Kieselerde 20-30% und Farbstoff enthalten. Darüber hinaus kann die Verbindungsschicht in einer weiteren bevorzugten Ausführungsform mindestens 2% Schwefel enthalten. Die Anteile entsprechen dabei jeweils Gew.% bezogen auf die Gesamtmasse der Verbindungsschicht. Während einer Vulkanisation können durch Schwefel beispielsweise die erste und die zweite Naturkautschukkomponente miteinander vernetzt werden:

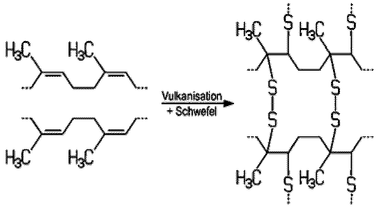

In einer weiteren bevorzugten Ausführungsform kann außerdem eine abziehbare Schutzfolie vorgesehen sein, welche die Verbindungsschicht bis zu deren Verwendung vor Verschmutzung schützt.

In einer überdies bevorzugten Ausführungsform kann die Zwischenschicht eine Vielzahl von im Wesentlichen strukturiert angeordneten faserförmigen Einlagen aufweisen.

Erfindungsgemäß kann das oben beschriebene Reparaturpflaster zur Reparatur eines beschädigten Fahrzeugreifens verwendet werden.

Erfindungsgemäß umfasst ein Verfahren zum Verbinden des oben beschriebenen Reparaturpflasters mit einem elastomeren Bauteil den Schritt des Herstellens einer Verbindungsschicht enthaltend eine erste und eine zweite Naturkautschukkomponente, wobei die erste Naturkautschukkomponente ein geringeres Molekulargewicht, M_{W}, aufweist als die zweite Naturkautschukkomponente, derart dass eine Mischung der ersten und der zweiten Naturkautschukkomponente eine bimodale Molekulargewichtsverteilung aufweist. Das Herstellen der Verbindungsschicht erfolgt erfindungsgemäß durch: (a) das Homogenisieren der zweiten Naturkautschukkomponente in einem Innenmischer; (b) die Wiederentnahme der zweiten Naturkautschukkomponente; und (c) das Mischen der ersten und der homogenisierten zweiten Naturkautschukkomponente. Das erfindungsgemäße Verfahren umfasst weiterhin den Schritt des Bereitstellens des elastomeren Bauteils; den Schritt des Anbringens des Reparaturpflasters an dem elastomeren Bauteil über die Verbindungsschicht, insbesondere an einer Reparaturstelle; und den Schritt der Vulkanisation des Reparaturpflasters an dem elastomeren Bauteil.

In einer bevorzugten Ausführungsform kann in Schritt c) des Herstellens der Verbindungsschicht die erste und die homogenisierte zweite Naturkautschukkomponente zusätzlich mit einem Füllstoffsystem, enthaltend eine gefällte Kieselsäure 5-15%, Kieselerde 20-30% und Farbstoff, und mindestens 2% Schwefel gemischt werden.

### KURZE BESCHREIBUNG DER FIGUREN

Figur 1 zeigt schematisch eine Schnittansicht eines Reparaturpflasters für einen Fahrzeugreifen gemäß einer Ausführungsform.
Figur 2 zeigt schematisch eine bimodale Molekulargewichtsverteilung resultierend aus der Überlagerung zweier unimodaler Molekulargewichtsverteilungen einer ersten und einer zweiten Naturkautschukkomponente.
Figur 3 zeigt ein Blockdiagramm eines Teils eines Verfahrens zum Verbinden eines Reparaturpflasters mit einem elastomeren Bauteil gemäß einer Ausführungsform.
Figur 4 zeigt ein Balkendiagramm bezüglich der unterschiedlichen Haftfestigkeit einer Verbindungsschicht mit Naturkautschuk in unimodaler und bimodaler Molekulargewichtsverteilung.
Figur 5 zeigt ein Balkendiagramm bezüglich der strukturellen Widerstandsfähigkeit einer Verbindungsschicht mit Naturkautschuk in unimodaler und bimodaler Molekulargewichtsverteilung.

### DETAILLIERTE BESCHREIBUNG DER FIGUREN UND BEVORZUGTER AUSFÜHRUNGSBEISPIELE

Im Folgenden werden Beispiele bzw. Ausführungsbeispiele der vorliegenden Erfindungschematisch unter Bezugnahme auf die beigefügten Figuren beschrieben. Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikation der Merkmale der beschriebenen Beispiele bzw. durch Kombination einzelner oder mehrerer Merkmale der beschriebenen Beispiele im Rahmen des Schutzumfanges der Ansprüche umfasst sind.

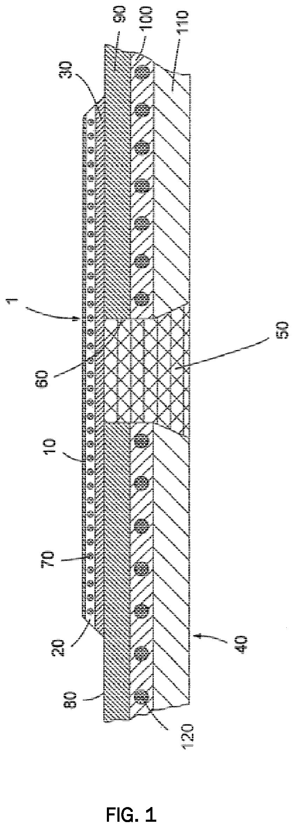

Bezugnehmend auf Fig. 1 ist schematisch ein Reparaturpflaster 1 für Fahrzeugreifen gemäß der vorliegenden Erfindung dargestellt. Auf der Oberseite des Reparaturpflasters 1 ist eine Deckschicht 10 ausgebildet, die keine Konfektionsklebrigkeit vor und nach der Reparatur aufweist. Angrenzend an die Deckschicht 10 ist eine Zwischenschicht 20 ausgebildet. In einer bevorzugten Ausführungsform kann die Zwischenschicht 20 eine Vielzahl von faserförmigen Einlagen 70 aufweisen. Diese Einlagen 70 können über die Dicke der Zwischenschicht 20 in einer oder mehreren Schichten angeordnet sein, wobei jede einzelne Schicht eine strukturelle Anordnung der faserförmigen Einlagen 70 aufweisen kann. Die Orientierung der einzelnen Schichten in der Zwischenschicht 20 können gegen einander verschieden sein. Insbesondere bei größeren Schäden im Laufflächen- oder Seitenwandbereich können diese Einlagen 70 dazu dienen, die im Schadensbereich unterbrochenen Festigkeitsträger zu überbrücken.

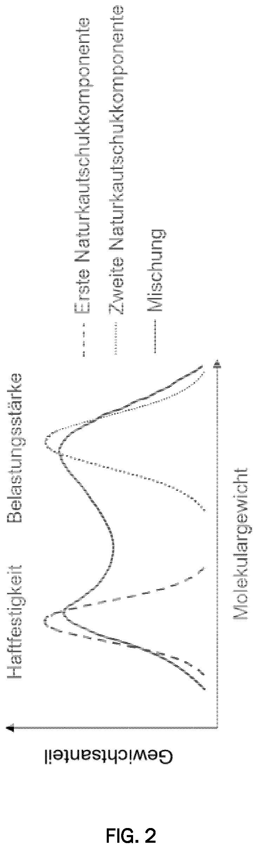

Auf der Unterseite des Reparaturpflasters 1 ist die Verbindungsschicht 30 ausgebildet, welche während und nach der Reparatur mit der Wandung 80 des Fahrzeugreifens in Kontakt steht. Weiterhin steht die Verbindungsschicht 30 vor und nach der Vulkanisation des Fahrzeugreifens mit einer Rohgummimasse 50 in Kontakt. Die Verbindungsschicht 30 und deren spezielle Eigenschaften werden weiter unten unter Bezugnahme auf die Figur 2 detailliert beschrieben.

Im Rahmen der Reparatur des beschädigten Fahrzeugreifens wird die schadhafte Stelle des Fahrzeugreifens aufgeraut, so dass Staub und Schmutz entfernt werden und eine unbeschädigte Schicht der in dem Fahrzeugreifen enthaltenen Komponenten freigelegt wird, wobei eine im Wesentlichen konische Gestaltung für eine Reparaturstelle 60 im Fahrzeugreifen gebildet wird. Anschließend wird die Reparaturstelle 60 mit der Rohgummimasse 50 vor der Vulkanisation der Verbindungsschicht 30 gefüllt.

Auf die Reparaturstelle 60 wird anschließend das Reparaturpflaster 1 aufgelegt, wobei dessen Abmessungen so gewählt werden, dass die Reparaturstelle 60 von diesem vollständig überdeckt wird. Des Weiteren sollten die Abmessungen des Reparaturpflasters 1 derart gewählt werden, dass die Reifenwandung 80 von der Verbindungsschicht 30 für eine stabile Verbindung ausreichend bedeckt wird. Das Reparaturpflaster 1 kann dabei beispielsweise auf eine entsprechende Fügetemperatur vorgewärmt sein.

Nach dem Anrollen des Reparaturpflasters 1 erfolgt die Vulkanisation der Reparaturstelle 60 und des Reparaturpflasters 1 unter Druck und Temperatur mittels einer geeigneten Vorrichtung oder im Autoklav.

In einer bevorzugten Ausführungsform kann zudem eine abziehbare Schutzfolie vorgesehen sein, welche die Verbindungsschicht 30 bis zu deren Verwendung vor Verschmutzung schützt.

Der Aufbau des Fahrzeugreifens ist hier beispielhaft für den Flankenbereich eines Radial-LKW-Reifens derart dargestellt, dass die Wandung 80 des Fahrzeugreifens durch den Innerliner 90 gebildet wird, wobei sich an diesen die Karkasse 100 anschließt, welche in Form einer Einlage den Kord 120 aufweist. Angrenzend an die Karkasse 100 befindet sich der Seitenwandgummi 110 des Fahrzeugreifens.

Bezugnehmend auf Figur 2 ist schematisch eine bimodale Molekulargewichtsverteilung (durchgezogene Linie) aus der Überlagerung zweier unimodaler Molekulargewichtsverteilungen für jeweils eine erste (gestrichelte Linie) und eine zweite (gepunktete Linie) Naturkautschukkomponente gezeigt. Wie aus Figur 2 ersichtlich, weist die erste Naturkautschukkomponente ein niedrigeres Molekulargewicht M_{W}, auf als die zweite Naturkautschukkomponente erkennbar an der Lage des Maximums. Sowohl die erste, als auch die zweite Naturkautschukkomponente weisen für sich genommen eine unimodale Molekulargewichtsverteilung auf. Dies ergibt sich aus der Tatsache, dass Naturkautschuk im Allgemeinen immer eine gewisse Molekulargewichtsverteilung aufweist, die Breite der Kurve kann dabei ein Indikator für die Reinheit oder Güte des Naturkautschuks sein.

Werden nun die erste und die zweite Naturkautschukkomponente miteinander gemischt, so resultiert die bimodale Molekulargewichtsverteilung aus der Überlagerung der beiden unimodalen Molekulargewichtsverteilungen entsprechend der Mischungsanteile. Die Lage der beiden Maxima in der bimodalen Molekulargewichtsverteilung wird dabei auch durch die Differenz der Maxima der unimodalen Molekulargewichtsverteilungen bestimmt. Liegen beispielsweise die Maxima der beiden unimodalen Molekulargewichtsverteilungen dicht beieinander, weisen also die erste und die zweite Naturkautschukkomponente nah beieinander liegende Molekulargewichte auf, so spiegelt sich dies auch in der bimodalen Verteilung wider. Dasselbe gilt in umgekehrtem Fall. Erfindungsgemäß ist eine bimodale Molekulargewichtsverteilung also bimodal, solange zwei Maxima identifizierbar sind. In einer bevorzugten Ausführungsform kann jedoch die erste Naturkautschukkomponente ein Molekulargewicht von M_{W} = 1 × 10⁶ g/mol aufweisen. In einer überdies bevorzugten Ausführungsform kann die zweite Naturkautschukkomponente ein Molekulargewicht von M_{W} = 2 × 10⁶ g/mol aufweisen. Das Molekulargewicht kann in beiden Ausführungsformen durch Diffusion-Sedimentation und/oder Osmose bestimmt werden.

Da Naturkautschuk als Naturprodukt unlösliche Gelanteile enthält, ist das Molekulargewicht von Naturkautschuk häufig schwer zu bestimmen. Alternativ oder zusätzlich kann daher die sogenannte Mooneyviskosität zur Charakterisierung herangezogen werden. In einer bevorzugten Ausführungsform, kann daher eine Mooneyviskosität der ersten Naturkautschukkomponente und der zweiten Naturkautschukkomponente mindestens um einen Faktor 2 unterschiedlich sein. In einer besonders bevorzugten Ausführungsform kann die Mooneyviskosität ML=1+4/100°C der ersten Naturkautschukkomponente 35 - 40 MU betragen. In einer überdies bevorzugten Ausführungsform kann die Mooneyviskosität ML=1 +4/100°C der zweiten Naturkautschukkomponente 70-90 MU betragen. Die Mooneyviskosität kann dabei beispielsweise nach DIN 53523 bestimmt werden.

Wie ebenfalls aus Figur 2 ersichtlich, kann über den Anteil der ersten Naturkautschukkomponente die Haftfestigkeit der Verbindungsschicht eingestellt werden und über die zweite Naturkautschukkomponente die Belastungsstärke. Erfindungsgemäß ist der Anteil der ersten und der zweiten Naturkautschukkomponente in der Mischung nicht eingeschränkt. In einer bevorzugten Ausführungsform kann ein Anteil der ersten Naturkautschukkomponente jedoch 25-50 Gew.-% bezogen auf die Gesamtmasse der ersten und der zweiten Naturkautschukkomponente betragen, und ein Anteil der zweiten Naturkautschukkomponente 50-75 Gew.-% bezogen auf die Gesamtmasse der ersten und der zweiten Naturkautschukkomponente betragen, besonders bevorzugt kann der Anteil der ersten Naturkautschukkomponente jedoch 35-45 Gew.% und der Anteil der zweiten Naturkautschukkomponente 55-65 Gew.% betragen, ganz besonders bevorzugt kann der Anteil der ersten Naturkautschukkomponente aber 44 Gew.% betragen und der Anteil der zweiten Naturkautschukkomponente 56 Gew.%. Vorteilhaft wird hierbei aber der Haftfestigkeit der höhere Stellenwert beigemessen, so dass der Anteil der ersten Naturkautschukkomponente so gewählt sein wird, dass die Haftfestigkeit auch bei verbesserter Belastungsstärke gut ist.

Erfindungsgemäß ist es nicht eingeschränkt, ob die erste und/oder die zweite Naturkautschukkomponente ein einzelner Naturkautschuk oder eine Mischung aus Naturkautschuken ist. Wie oben bereits erwähnt, weist Naturkautschuk als einzelne Komponente betrachtet im Allgemeinen immer schon eine gewisse Molekulargewichtsverteilung auf. Dies gilt aber ebenso für Mischungen aus zwei oder mehr einzelnen Naturkautschuken, die so hergestellt sein können, dass sie eine entsprechende unimodale Molekulargewichtsverteilung aufweisen. In einer bevorzugten Ausführungsform kann daher die erste Naturkautschukkomponente und/oder die zweite Naturkautschukkomponente aus einer Mischung aus Naturkautschuken bestehen. In einer weiteren bevorzugten Ausführungsform kann die erste Naturkautschukkomponente und/oder die zweite Naturkautschukkomponente aus einem einzelnen Naturkautschuk bestehen.

Des Weiteren kann die Verbindungsschicht 30 in einer bevorzugten Ausführungsform neben der ersten und der zweiten Naturkautschukkomponente zusätzlich ein Füllstoffsystem aus einer gefällten Kieselsäure 5-15%, Kieselerde 20-30% und Farbstoff enthalten.

Darüber hinaus kann die Verbindungsschicht in einer weiteren bevorzugten Ausführungsform mindestens 2% Schwefel enthalten. Während einer Vulkanisation können so die erste und die zweite Naturkautschukkomponente über Schwefelbrücken vernetzt werden.

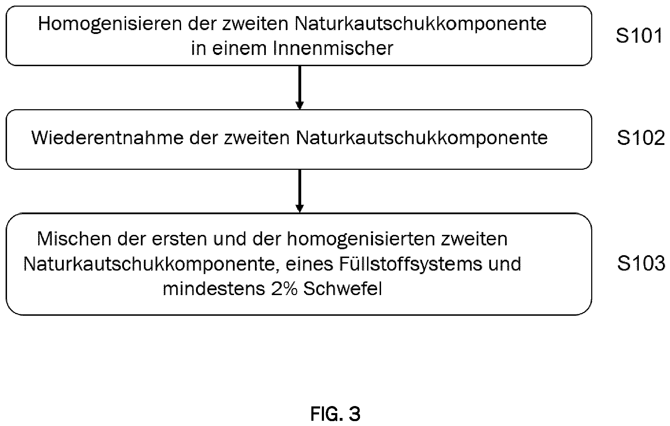

Bezugnehmend auf die Figur 3 wird im Folgenden ein Teil eines Verfahrens zum Verbinden eines Reparaturpflasters mit einem elastomeren Bauteil gemäß einer Ausführungsform beschrieben. Wie in Figur 3 ersichtlich, wird zur Herstellung einer Verbindungsschicht enthaltend eine erste und eine zweite Naturkautschukkomponente, wobei die erste Naturkautschukkomponente ein geringeres Molekulargewicht M_{W}, aufweist als die zweite Naturkautschukkomponente, derart dass eine Mischung der ersten und der zweiten Naturkautschukkomponente eine bimodale Molekulargewichtsverteilung aufweist, zunächst in Schritt S101 die zweite Naturkautschukkomponente in einem Innenmischer homogenisiert. Nach der Homogenisierung wird in Schritt S102 die zweite Naturkautschukkomponente dem Innenmischer wieder entnommen. Die nun homogenisierte zweite Naturkautschukkomponente wird dann mit der ersten Naturkautschukkomponente gemischt. Gemäß der in Figur 3 gezeigten Ausführungsform kann in Schritt S103 die homogenisierte zweite Naturkautschukkomponente mit der ersten Naturkautschukkomponente, dem oben beschriebenen Füllstoffsystem und mindestens 2% Schwefel gemischt werden.

Die mit Bezug auf Figur 3 beschriebenen Schritte sind Teil des erfindungsgemäßen Verfahrens, welches weiterhin die folgenden Schritte umfasst: Bereitstellen eines elastomeren Bauteils; Anbringen des Reparaturpflasters an dem elastomeren Bauteil über die Verbindungsschicht, insbesondere an einer Reparaturstelle, und Vulkanisation des Reparaturpflasters an dem elastomeren Bauteil.

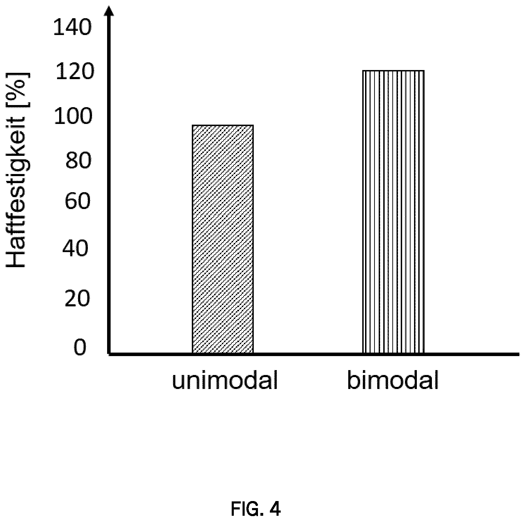

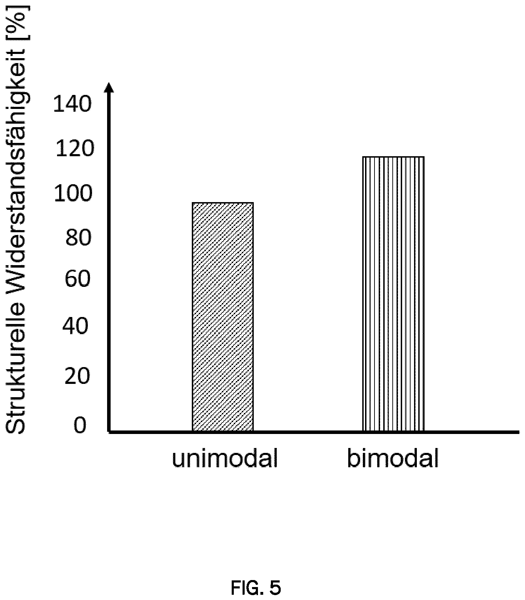

Die Vorteile der vorliegenden Erfindung werden nun mit Bezug auf die Figuren 4 und 5 erläutert. Das hierin beschriebene Reparaturpflaster und das hierin beschriebene Verfahren ermöglichen insbesondere, die Eigenschaften der Verbindungsschicht aufgrund der bimodalen Molekulargewichtsverteilung der beiden Naturkautschukkomponenten im Hinblick auf die Kompatibilität des Reparaturpflasters mit unterschiedlichen Reifenummantelungen oder unterschiedlichen aufgerauten Strukturen von Schadensstellen maßgeschneidert anzupassen. Wie aus den Figuren 4 und 5 ersichtlich, weist die Mischung aus der ersten und der zweiten Naturkautschukkomponente mit bimodaler Molekulargewichtsverteilung nicht nur eine gegenüber einer jeweils unimodalen Verteilung in der Naturkautschukkomponente verbesserte Haftfestigkeit, sondern gleichzeitig auch eine verbesserte strukturelle Widerstandfähigkeit auf. Mit anderen Worten, eine Verbindungsschicht, welche eine bimodale Molekulargewichtsverteilung durch Mischung einer ersten und einer zweiten Naturkautschukkomponente aufweist, zeigt aufgrund des Anteils an Naturkautschuk mit niedrigem Molekulargewicht eine verbesserte Fähigkeit, sich mit aufgerauten Oberflächen zu verbinden, wohingegen durch den Anteil an Naturkautschuk mit hohem Molekulargewicht eine erhöhte strukturelle Widerstandsfähigkeit der Verbindungsschicht erreicht werden kann, welche eine verbesserte Alterungsbeständigkeit zur Folge hat.

### BEZUGSZEICHENLISTE

1 Reparaturpflaster
10 Deckschicht
20 Zwischenschicht
30 Verbindungsschicht
40 elastomeres Bauteil
50 Rohgummimasse
60 Reparaturstelle
70 Faserförmige Einlagen
80 Wandung
90 Innerliner
100 Karkasse
110 Seitenwandgummi des Fahrzeugreifens
120 Kord

## Patentansprüche

1. Reparaturpflaster (1) für ein elastomeres Bauteil (40), insbesondere für einen Fahrzeugreifen, umfassend:
eine Deckschicht (10),
eine Verbindungsschicht (30) zur Auflage auf einer Wandung (80) des elastomeren Bauteils (40), und
mindestens eine zwischen der Verbindungsschicht (30) und der Deckschicht (10) angeordnete Zwischenschicht (20),
**dadurch gekennzeichnet, dass**
die Verbindungsschicht (30) vor der Vulkanisation mit dem elastomeren Bauteil (40) eine erste und eine zweite Naturkautschukkomponente enthält, wobei die erste Naturkautschukkomponente ein geringeres Molekulargewicht M_{W}, aufweist als die zweite Naturkautschukkomponente, derart dass eine Mischung der ersten und der zweiten Naturkautschukkomponente eine bimodale Molekulargewichtsverteilung aufweist.

2. Reparaturpflaster (1) nach Anspruch 1, wobei eine Mooneyviskosität der ersten Naturkautschukkomponente und der zweiten Naturkautschukkomponente mindestens um einen Faktor 2 unterschiedlich ist.

3. Reparaturpflaster (1) nach Anspruch 2, wobei die Mooneyviskosität ML=1+4/100°C der ersten Naturkautschukkomponente 35 - 40 MU beträgt.

4. Reparaturpflaster (1) nach Anspruch 2 oder 3, wobei die Mooneyviskosität ML=1+4/100°C der zweiten Naturkautschukkomponente 70 - 90 MU beträgt.

5. Reparaturpflaster (1) nach zumindest einem der Ansprüche 1 bis 4, wobei die erste Naturkautschukkomponente und/oder die zweite Naturkautschukkomponente aus einer Mischung aus Naturkautschuken bestehen.

6. Reparaturpflaster (1) nach zumindest einem der Ansprüche 1 bis 5, wobei die erste Naturkautschukkomponente und/oder die zweite Naturkautschukkomponente aus einem einzelnen Naturkautschuk bestehen.

7. Reparaturpflaster (1) nach zumindest einem der Ansprüche 1 bis 6, wobei die erste Naturkautschukkomponente ein Molekulargewicht von M_{W} = 1 × 10⁶ g/mol aufweist, und wobei das Molekulargewicht durch Diffusion-Sedimentation und/oder Osmose bestimmt wird.

8. Reparaturpflaster (1) nach zumindest einem der Ansprüche 1 bis 7, wobei die zweite Naturkautschukkomponente ein Molekulargewicht von M_{W} = 2 × 10⁶ g/mol aufweist, und wobei das Molekulargewicht durch Diffusion-Sedimentation und/oder Osmose bestimmt wird.

9. Reparaturpflaster (1) nach zumindest einem der Ansprüche 1 bis 8, wobei ein Anteil der ersten Naturkautschukkomponente 25-50 Gew.-% bezogen auf die Gesamtmasse der ersten und der zweiten Naturkautschukkomponente beträgt, und ein Anteil der zweiten Naturkautschukkomponente 50-75 Gew.-% bezogen auf die Gesamtmasse der ersten und der zweiten Naturkautschukkomponente beträgt.

10. Reparaturpflaster (1) nach zumindest einem der Ansprüche 1 bis 9, wobei die Verbindungsschicht (30) zusätzlich ein Füllstoffsystem aus einer gefällten Kieselsäure 5-15%, Kieselerde 20-30% und Farbstoff enthält.

11. Reparaturpflaster (1) nach zumindest einem der Ansprüche 1 bis 10, wobei die Verbindungsschicht (30) mindestens 2% Schwefel enthält.

12. Reparaturpflaster (1) nach zumindest einem der Ansprüche 1 bis 11, wobei eine abziehbare Schutzfolie vorgesehen ist, welche die Verbindungsschicht (30) bis zu deren Verwendung vor Verschmutzung schützt.

13. Reparaturpflaster (1) nach zumindest einem der Ansprüche 1 bis 12, wobei die Zwischenschicht (20) eine Vielzahl von im Wesentlichen strukturiert angeordneten faserförmigen Einlagen (70) aufweist.

14. Verwendung eines Reparaturpflasters (1) nach zumindest einem der Ansprüche 1 bis 13 zur Reparatur eines beschädigten Fahrzeugreifens.

15. Verfahren zum Verbinden eines Reparaturpflasters (1) nach zumindest einem der Ansprüche 1 bis 13 mit einem elastomeren Bauteil (40), umfassend die Schritte:
Herstellen einer Verbindungsschicht (30) enthaltend eine erste und eine zweite Naturkautschukkomponente, wobei die erste Naturkautschukkomponente ein geringeres Molekulargewicht M_{W}, aufweist als die zweite Naturkautschukkomponente, derart dass eine Mischung der ersten und der zweiten Naturkautschukkomponente eine bimodale Molekulargewichtsverteilung aufweist, durch:
(a) Homogenisieren (S101) der zweiten Naturkautschukkomponente in einem Innenmischer;
(b) Wiederentnahme (S102) der zweiten Naturkautschukkomponente; und
(c) Mischen (S103) der ersten und der homogenisierten zweiten Naturkautschukkomponente;
Bereitstellen des elastomeren Bauteils (40);
Anbringen des Reparaturpflasters (1) an dem elastomeren Bauteil (40) über die Verbindungsschicht (30), insbesondere an einer Reparaturstelle (60); und
Vulkanisation des Reparaturpflasters (1) an dem elastomeren Bauteil (40).

16. Verfahren nach Anspruch 15, wobei in Schritt c) des Herstellens der Verbindungsschicht die erste und die homogenisierte zweite Naturkautschukkomponente zusätzlich mit mindestens 2% Schwefel, und einem Füllstoffsystem enthaltend eine gefällte Kieselsäure 5-15%, Kieselerde 20-30% und Farbstoff, gemischt wird.

## Claims

1. Repair patch (1) for an elastomeric component (40), in particular for a vehicle tyre, comprising:
a cover layer (10),
a connecting layer (30) for resting on a wall (80) of the elastomeric component (40), and
at least one intermediate layer (20) arranged between the connecting layer (30) and the cover layer (10),
**characterised in that**
the connecting layer (30) contains a first and a second natural rubber component before vulcanization with the elastomeric component (40), wherein the first natural rubber component has a lower molecular weight M_{W} than the second natural rubber component, such that a mixture of the first and the second natural rubber component has a bimodal molecular weight distribution.

2. Repair patch (1) according to claim 1, wherein a Mooney viscosity of the first natural rubber component and of the second natural rubber component differs at least by a factor of 2.

3. Repair patch (1) according to claim 2, wherein the Mooney viscosity ML=1+4/100°C of the first natural rubber component is 35 - 40 MU.

4. Repair patch (1) according to claim 2 or 3, wherein the Mooney viscosity ML=1+4/100°C of the second natural rubber component is 70 - 90 MU.

5. Repair patch (1) according to at least one of claims 1 to 4, wherein the first natural rubber component and/or the second natural rubber component consist of a mixture of natural rubbers.

6. Repair patch (1) according to at least one of claims 1 to 5, wherein the first natural rubber component and/or the second natural rubber component consist of a single natural rubber.

7. Repair patch (1) according to at least one of claims 1 to 6, wherein the first natural rubber component has a molecular weight of M_{W} = 1 × 10⁶ g/mol, and wherein the molecular weight is determined by diffusion sedimentation and/or osmosis.

8. Repair patch (1) according to at least one of claims 1 to 7, wherein the second natural rubber component has a molecular weight of M_{W} = 2 × 10⁶ g/mol, and wherein the molecular weight is determined by diffusion sedimentation and/or osmosis.

9. Repair patch (1) according to at least one of claims 1 to 8, wherein a proportion of the first natural rubber component is 25-50% by weight based on the total mass of the first and the second natural rubber component, and a proportion of the second natural rubber component is 50-75% by weight based on the total mass of the first and the second natural rubber component.

10. Repair patch (1) according to at least one of claims 1 to 9, wherein the connecting layer (30) additionally contains a filler system of a precipitated silica 5-15%, silica 20-30% and dye.

11. Repair patch (1) according to at least one of claims 1 to 10, wherein the connecting layer (30) contains at least 2% sulfur.

12. Repair patch (1) according to at least one of claims 1 to 11, wherein a peelable protective film is provided which protects the connecting layer (30) from soiling until it is used.

13. Repair patch (1) according to at least one of claims 1 to 12, wherein the intermediate layer (20) has a plurality of substantially structured fibrous inserts (70).

14. Use of a repair patch (1) according to at least one of claims 1 to 13 for repairing a damaged vehicle tyre.

15. Method for connecting a repair patch (1) according to at least one of claims 1 to 13 to an elastomeric component (40), comprising the steps of:
producing a connecting layer (30) containing a first and a second natural rubber component, wherein the first natural rubber component has a lower molecular weight M_{W} than the second natural rubber component, such that a mixture of the first and the second natural rubber component has a bimodal molecular weight distribution, by:
(a) homogenizing (S101) the second natural rubber component in an internal mixer;
(b) removing (S102) the second natural rubber component; and
(c) mixing (S103) the first and the homogenized second natural rubber component;
providing the elastomeric component (40);
attaching the repair patch (1) to the elastomeric component (40) via the connecting layer (30), in particular at a repair point (60); and
vulcanizing the repair patch (1) on the elastomeric component (40).

16. Method according to claim 15, wherein in step c) of producing the connecting layer the first and the homogenized second natural rubber component are additionally mixed with at least 2% sulfur, and a filler system containing a precipitated silica 5-15%, silica 20-30% and dye.

## Revendications

1. Pansement de réparation (1) pour un composant élastomère (40), en particulier pour un pneu de véhicule, comprenant :
une couche de recouvrement (10),
une couche de liaison (30) destinée à reposer sur une paroi (80) des composants élastomères (40), et
au moins une couche intermédiaire (20) disposée entre la couche de liaison (30) et la couche de recouvrement (10),
**caractérisé en ce que**
la couche de liaison (30) avant la vulcanisation avec le composant élastomère (40) contient un premier et un deuxième composant de caoutchouc naturel, le premier composant de caoutchouc naturel présentant un poids moléculaire M_{W} plus faible que le deuxième composant de caoutchouc naturel, de telle sorte qu'un mélange du premier et du deuxième composant de caoutchouc naturel présente une répartition bimodale des poids moléculaires.

2. Pansement de réparation (1) selon la revendication 1, dans lequel une viscosité Mooney du premier composant de caoutchouc naturel et du deuxième composant de caoutchouc naturel est différente d'au moins un facteur 2.

3. Pansement de réparation (1) selon la revendication 2, dans lequel la viscosité Mooney ML = 1 + 4/100°C du premier composant de caoutchouc naturel est de 35 à 40 MU.

4. Pansement de réparation (1) selon la revendication 2 ou 3, dans lequel la viscosité Mooney ML = 1 + 4/100°C du deuxième composant de caoutchouc naturel est de 70 à 90 MU.

5. Pansement de réparation (1) selon au moins l'une des revendications 1 à 4, dans lequel le premier composant de caoutchouc naturel et/ou le deuxième composant de caoutchouc naturel sont constitués d'un mélange de caoutchoucs naturels.

6. Pansement de réparation (1) selon au moins l'une des revendications 1 à 5, dans lequel le premier composant de caoutchouc naturel et/ou le deuxième composant de caoutchouc naturel sont constitués d'un seul caoutchouc naturel.

7. Pansement de réparation (1) selon au moins l'une des revendications 1 à 6, dans lequel le premier composant de caoutchouc naturel présente un poids moléculaire M_{W} = 1 × 10⁶ g/mol, et dans lequel le poids moléculaire est déterminé par diffusion-sédimentation et/ou osmose.

8. Pansement de réparation (1) selon au moins l'une des revendications 1 à 7, dans lequel le deuxième composant de caoutchouc naturel présente un poids moléculaire M_{W} = 2 × 10⁶ g/mol, et dans lequel le poids moléculaire est déterminé par diffusion-sédimentation et/ou osmose.

9. Pansement de réparation (1) selon au moins l'une des revendications 1 à 8, dans lequel une proportion du premier composant de caoutchouc naturel est de 25 à 50 % en poids par rapport à la masse totale du premier et du deuxième composant de caoutchouc naturel, et une proportion du deuxième composant de caoutchouc naturel est de 50 à 75 % en poids par rapport à la masse totale du premier et du deuxième composant de caoutchouc naturel.

10. Pansement de réparation (1) selon au moins l'une des revendications 1 à 9, dans lequel la couche de liaison (30) contient en outre un système de charge constitué d'un acide silicique précipité de 5 à 15 %, de silice de 20 à 30 % et de colorant.

11. Pansement de réparation (1) selon au moins l'une des revendications 1 à 10, dans lequel la couche de liaison (30) contient au moins 2 % de soufre.

12. Pansement de réparation (1) selon au moins l'une des revendications 1 à 11, dans lequel une feuille de protection pelable est prévue, qui protège la couche de liaison (30) contre l'encrassement avant son utilisation.

13. Pansement de réparation (1) selon au moins l'une des revendications 1 à 12, dans lequel la couche intermédiaire (20) présente une pluralité d'inserts (70) en forme de fibres disposés de manière essentiellement structurée.

14. Utilisation d'un pansement de réparation (1) selon au moins l'une des revendications 1 à 13 pour la réparation d'un pneu de véhicule endommagé.

15. Procédé de liaison d'un pansement de réparation (1) selon au moins l'une des revendications 1 à 13 avec un composant élastomère (40), comprenant les étapes suivantes :
fabrication d'une couche de liaison (30) contenant un premier et un deuxième composant de caoutchouc naturel, le premier composant de caoutchouc naturel présentant un poids moléculaire M_{w} plus faible que le deuxième composant de caoutchouc naturel, de telle sorte qu'un mélange du premier et du deuxième composant de caoutchouc naturel présente une répartition bimodale des poids moléculaires, par :
(a) homogénéisation (S101) du deuxième composant de caoutchouc naturel dans un mélangeur interne ;
(b) récupération (S102) du deuxième composant de caoutchouc naturel ; et
(c) mélange (S103) du premier et du deuxième homogénéisés composant de caoutchouc naturel ;
fourniture des composants élastomères (40) ;
application des pansements de réparation (1) sur un composant élastomère (40) au-dessus de la couche de liaison (30), en particulier sur une plaque de réparation (60) ; et
vulcanisation des pansements de réparation (1) sur un composant élastomère (40).

16. Procédé selon la revendication 15, dans lequel, dans l'étape c) de fabrication de la couche de liaison, le premier et le deuxième composant de caoutchouc naturel homogénéisés sont mélangés en outre avec au moins 2 % de soufre, et un système de charge contenant un acide silicique précipité de 5 à 15 %, de silice de 20 à 30 % et de colorant.
